# EUROPÄISCHE PATENTSCHRIFT

(11) **EP 0 654 550 B1**
(45) Veröffentlichungstag und Bekanntmachung des Hinweises auf die Patenterteilung: **02.02.2000**
(21) Anmeldenummer: 95101513.0
(22) Anmeldetag: 07.08.1989
(51) Int. Cl.: D01H 1/32, H02P 6/06

(54) **Streckwerk**
Drawing frame
Banc d'étirage

(30) Priorität: 05.08.1988 CH 297588
(43) Veröffentlichungstag der Anmeldung: 24.05.1995
(62) Teilanmeldung aus: 89114579.9
(73) Patentinhaber: MASCHINENFABRIK RIETER AG, CH-8406 Winterthur (CH)
(72) Erfinder: Meyer, Urs, Dr., CH-8172 Niederglatt (ZH) (CH); Hüppi, Stefan, CH-6340 Baar (CH); Hartmeier, Werner, CH-8307 Effretikon (CH)
(74) Vertreter: Bergmeier, Werner, Dipl.-Ing.

(56) Entgegenhaltungen:
- DE-A- 2 753 924
- DE-A- 3 036 908
- FR-A- 2 585 523
- GB-A- 2 044 301
- GB-A- 2 158 617
- US-A- 3 718 846

## Beschreibung

Die Erfindung betrifft ein Streckwerk, wie dies im Oberbegriff der nebengeordneten Patentansprüche 1 und 2 definiert ist.

Ein Streckwerk dieser Art ist beispielsweise aus der GB-A-2 044 301 bekannt. Es handelt sich bei den dort beschriebenen Motoren um Drehstrommotoren in Form von Synchronmotoren.

Ein ähnliches Streckwerk ist der DE-A-27 53 924 zu entnehmen. Nach dem Hauptanspruch der DE-A-27 53 924 befaßt sich dieser mit einer Antriebseinrichtung für angetriebene Arbeitsorgane einer Faserverbände herstellenden und/oder verziehenden und/oder Faden behandelnden Textilmaschine für Spinnereien oder Zwirnereien, wobei eine erste Sorte der Arbeitsorgane von mindestens einem ersten Elektromotor angetrieben wird und mindestens eine andere Sorte von Arbeitsorganen durch mindestens einen gesonderten Synchronmotor angetrieben wird, mit dem besonderen Kennzeichen, daß die Speisefrequenz des mindestens einen Synchronmotors der anderen Arbeitsorgansorte oder mindestens einer der anderen Arbeitsorgansorten durch einen statistischen, digitalen Frequenzumsetzer vielstufig und feinstufig verstellbar ist, dessen Eingangsfrequenz durch einen mit den oder von den ersten Arbeitsorganen geführten primären Taktgeber bestimmt ist. Es wird auch ohne eine nähere Erläuterung gesagt, daß der erste Motor ein Gleichstrommotor sein kann.

Bei Textilmaschinen, welche ein Streckwerk enthalten, kann es sich beispielsweise um Ringspinnmaschinen, Flyer, Trichter-, Glockenspinnmaschinen oder dergleichen handeln. Das Streckwerk dient dabei dem Verziehen eines Faserbandes auf eine gewünschte Materialstärke, welche möglichst genau eingehalten werden soll.

Die Drall-Einleitung nach dem Streckwerk bzw. die Aufwickelgeschwindigkeit beim anschließenden Aufwickeln auf eine Spule muß sehr genau auf die Antriebsgeschwindigkeit des Streckwerkes abgestimmt sein, um Unregelmäßigkeiten im Garn, Fadenbrüche oder Abweichungen in der Fadenstärke zu vermeiden. Besonders kritisch ist die Abstimmung der Antriebsgeschwindigkeit eines Streckwerks an die Spindeldrehzahl auf einer Ringspinnmaschine, da die Eigendynamik des mit hoher Geschwindigkeit umlaufenden Ringes sowie die Geometrie des auf die Spindel auflaufenden Fadens (Fadenballon) nicht durch Unregelmäßigkeiten des vom Streckwerk ablaufenden Fadens gestört werden dürfen. Diese Abstimmung muß während allen Betriebsphasen genau aufrechterhalten werden, während die Spinnstelle Faden produziert, also auch beim Hochlaufen und Abbremsen.

Zur Abstimmung der Streckwerkdrehzahl auf die Drehzahl des Drallgebers sind mechanische und elektrische Kupplungselemente zwischen beiden Antriebsteilen bekannt. Die mechanischen Kupplungsteile bestehen aus Getrieben mit im allgemeinen auswechselbaren Zahnradsätzen zur Anpassung an verschiedene Garnqualitäten oder andere Produktionsbedingungen. Eine elektrische Kupplung ist aus den oben genannten Schriften und z.B. auch aus der DE 29 11 378 bekannt, wonach umrichtergespeiste Synchronmotoren mit variabler Frequenz in der Drehzahl gesteuert werden. Die Erzeugung der Taktfrequenz für die Speisung erfolgt durch einen Referenz- Taktgeber sowie mehrere Frequenzteilerstufen. Abhängig von der Drehzahlvorgabe wird die entsprechende Sollfrequenz gemäß der bekannten Motorcharakteristik in eine für die Speisung des Motors geeignete Drehstrom-Spannung umgesetzt. Da die Frequenzteilung nur in ganzzahligen Werte-Stufen erfolgen kann, läßt sich ein gewisser Restfehler in der Winkellage zwischen den einzelnen Antrieben und damit auch ein gewisser Drehzahl-Fehler mit den bekannten Mitteln nicht beseitigen.

Beim erwähnten Drehstrommotor handelt es sich um einen Synchron- oder Asynchronmotor, mit einer einigermaßen bekannten Spannungs/Frequenz-Charakteristik. Wegen des geringen Kippmomentes eines solchen Motors muß seine Nennleistung praktisch dem beim Anfahren verlangten Drehmoment entsprechen. Bedingt durch die relativ große Anzahl von mechanischen Lagerstellen und Reibwiderständen innerhalb eines Streckwerkes kann das Anfahrdrehmoment jedoch relativ hoch werden, verglichen mit dem Drehmoment während des Normalbetriebes. An Ringspinnmaschinen werden beispielsweise Streckwerks-Antriebsmotoren auf etwa 5 Watt Nennleistung pro Spinnstelle ausgelegt; dies bedeutet eine Motorleistung von 5 kW bei einer Maschine mit 1000 Spinnstellen.

Nachteilig bei den bekannten gekoppelten Streckwerkantrieben ist die erwähnte relativ hohe Nennleistung für den Antriebsmotor, die aufwendige Frequenz/Spannungsregelung sowie das Fehlen einer Noteinrichtung, die ein kontrolliertes Abstellen bei plötzlichem Spannungsausfall sicherstellt. Ein solcher Spannungsabfall hat für bekannte Maschinen der erwähnten Art ein unkontrolliertes Auslaufen zur Folge, was spätestens beim Wiederanfahren der Maschine zu einer hohen Zahl von Fadenbrüchen führt. Verbesserungswürdig sind außer dem die normalen Anfahr- und Abschaltbedingungen an derartigen Textilmaschinen, welche besonders auf langen Streckwerken durch Torsionsschwingungen bedingte relativ hohe Fadenbruchzahlen zur Folge haben.

Es ist Aufgabe der vorliegenden Erfindung, ein Streckwerk der eingangs genannten Art dahingehend zu verbessern, daß die genannten Nachteile eliminiert werden.

Gemäß der Erfindung wird die Aufgabe durch die in den Patentansprüchen 1 und 2 definierten Merkmale gelöst. Es kommen also nach der vorliegenden Erfindung entweder ein rotationsgeregelter Gleichstrommotor als Mastermotor und ein positionsgeregelter Gleichstrommotor als Slavemotor oder ein positionsgeregelter Gleichstrommotor als Mastermotor und ein positionsgeregelter Gleichstrommotor als Slavemotor zum Einsatz.

Es soll an dieser Stelle zum Ausdruck gebracht werden, daß bürstenlose Gleichstrommotor an sich bekannt sind, und zwar beispielsweise aus der GB-A-2 158 617, wobei dort lediglich ein Antriebsmotor und nicht Master- und Slavemotoren zur Anwendung gelangt. Master- und Slavemotoren in Form von Drehstrommotoren sind der US-A-3 718 846 zu entnehmen. Ähnliches ist auch in der FR-A-2 585 523 beschrieben.

Der Vorteil der hier vorgeschlagenen Lösungen besteht im wesentlichen in kontrollierten Auslaufbedingungen bei plötzlichem Stromausfall sowie in präzis und feinstufig regelbaren Anlauf- und Auslaufbedingungen. Schließlich läßt sich ein merklich kleiner dimensionierter Antriebsmotor für das Streckwerk verwenden, dessen Nennleistung beispielsweise nur 1/3 der Nennleistung von Motoren an bekannten Maschinen dieser Art beträgt. Ein weiterer Vorteil zeigt sich an besonders langen Textilmaschinen, bei denen z.B. der Zylinder eines Streckwerks sich über 30 bis 40 Meter erstreckt.

Obwohl es bereits Vorschläge zur Unterteilung dieser Zylinder gibt, läßt sich die Synchronisierung der Streckwerk- Drehzahlen mit denjenigen des Hauptantriebs mit der vorliegenden Erfindung besonders einfach, präzis und zuverlässig lösen, so daß sich auch für lange Zylinder erhebliche Verbesserungen ergeben.

Probleme besonderer Art ergeben sich bei Spinnmaschinen, insbesondere auch aus dem Umstand, daß diese eine Vielzahl von Zylindern umfassen. So sind üblicherweise in einer Ringspinnmaschine drei und in einer Vorspinnmaschine vier Zylinder vorgesehen.

Die Zylinder definieren eine Vielzahl von Streckzonen, von denen eine im allgemeinen die Hauptstreckzone ist, in welcher der größte Teil der Verstreckung durchgeführt wird. Die Drehverhältnisse der Zylinder dieser Streckwerkanordnung sind von entscheidender Bedeutung für den Betrieb der Gesamtanordnung. Fehler in diesen Verhältnissen führen unmittelbar zu Fehlern im aus dem Faserband gesponnenen Garn, da es nicht möglich ist, Verzugsfehler zwischen der Streckwerkanordnung und der Spinnstelle (Spindel oder andere einen Drall vermittelnde Elemente) zu beseitigen. Dies trifft insbesondere auf die beiden die Hauptstreckzone definierenden Zylinder und/oder die Zylinder im Lieferbereich zu. Der Grund dafür ist, daß sich die hauptsächliche (und kritische) Drehzahldifferenz zwischen den Zylindern einstellt, welche die Hauptstreckzone definieren, d.h. die Zone mit der höchsten Verstrekkung, und die höchsten Zylinderdrehzahlen im Lieferbereich gegeben sind.

Bevorzugte Ausführungsformen der Erfindung sind den Unteransprüchen zu entnehmen.

Einzelheiten und weitere Vorteile der Erfindung werden in der nachfolgenden Beschreibung anhand von Ausführungsbeispielen mit Hilfe der Zeichnung näher erläutert.

Es zeigt:

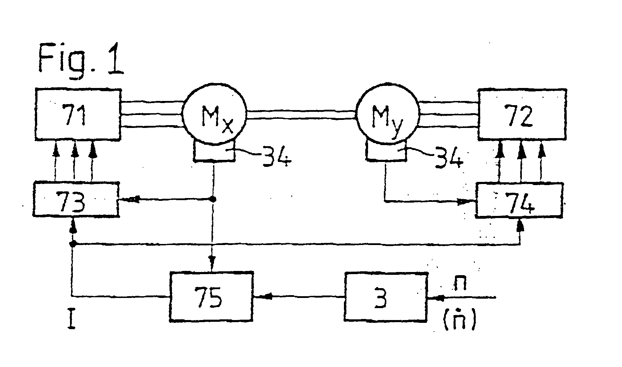

- Fig. 1: das Beispiel einer Master-Slave-Regelung für zwei Motoren eines Streckwerkes, wobei dieses Beispiel die Erfindung nicht zeigt, jedoch zur Erläuterung der Erfindung dienlich ist.

Die Figur 1 zeigt ein Ausführungsbeispiel für die zweckmäßige Regelung von zwei auf denselben Zylinder wirkenden Antriebsmotoren Mx, My unter strikter Einhaltung des Synchronismus, ohne Gefahr eines Gegeneinanderarbeitens der beiden Motoren. Überschreiten die Stränge eines solchen Streckwerkes eine gewisse Länge, würden sich trotz präziser Positionsregelung des Antriebsmotors mechanische Torsionsschwingungen der Streckwerkszylinder unangenehm bemerkbar machen. Zur Eliminierung derartiger Schwingungen wird das Streckwerk an beiden Enden durch je einen Motor angetrieben.

Die Motoren Mx und My werden durch separate Reglerendstufen 71, 72 gespeist, welche je einen vorgeschalteten elektronischen Kommutator 73 bzw. 74 aufweisen. Nach dem Prinzip der abhängigen Regelung (Master-Slave) wird ein einziger Lageregler 75 nur vom ersten Motor Mx bezüglich seiner Istlage nachgeregelt. Der Strom-Sollwert Isoll des Lagereglers 75 wirkt auf beide elektronischen Kommutatoren 73 und 74. Damit ist sichergestellt, daß beide Motoren Mx und My das gleiche Drehmoment erzeugen.

Gemäß der vorliegenden Lehre kann eine Antriebseinrichtung durch einen Master-Motor und die andere durch einen Slave-Motor angetrieben werden. Der Sollwert für den Slave-Motor wird dann nicht von einer zentralen Steuerung, sondern vom Master-Motor abgeleitet. In diesem Falle kann der Master-Motor ein rotationsgeregelter Motor sein, der mit einer Kodiereinrichtung ausgestattet ist, welche nicht in der Rückkopplungssteuerung des Master-Motors selbst, sondern dazu verwendet wird, einen Sollwert für einen lage- bzw. positionsgeregelten Slave-Motor zu liefern. Der rotationsgeregelte Motor, d.h. der Mastermotor, wird dann vorzugsweise dazu verwendet, den Lieferzylinder eines Streckwerks anzutreiben, so daß der vom Slavemotor angetriebene Mittelzylinder zwangsweise der Lage des Lieferzylinders folgt.

Die Art des gesteuerten Eingangssignals zu dem jeweiligen Antriebsmotor hängt von der Auslegung dieses Motors und der gewünschten Leistung ab. Generell wird es erforderlich sein, den Leistungseintrag zum Motor so zu steuern, daß dieser in der Lage ist, auf erfaßte Abweichungen vom gewünschten (Soll-) Zustand entsprechend zu reagieren. Diese Reaktion bzw. Antwort muß die Belastung des Motors sowie die erforderliche Geschwindigkeit der Antwort berücksichtigen, wodurch die Beschleunigung des Motors repräsentiert wird.

Aus den bereits oben beschriebenen Gründen wird als Motor bevorzugt ein bürstenloser Gleichstrommotor verwendet. Diese Art von Motor umfaßt ein der Welle (Rotor) zugeordnetes Positionserfassungssystem, um die elektronische Kommutation zu ermöglichen, so daß dieser Motor bereits in idealer Weise zur Verwendung in Verbindung mit einer positionsregelnden Rückkopplungsschleife geeignet ist. Die Verwendung einer solchen Art von Motor ist jedoch zur Verwirklichung einer positionsgeregelten Antriebsanordnung nicht zwingend erforderlich.

Die Erfindung ist jedoch nicht auf die Verwendung bei Spindeln aufweisenden Spinnstellen begrenzt. Im Falle eines Düsenspinnsystems, wie es beispielsweise in letzter Zeit von der Murata-Company angeboten wird, umfaßt die Spinnstelle Luftdüsen, welche keine drehenden mechanischen Teile aufweisen. Die Erfindung ist im Kern in gleicher Weise auch bei Streckwerkanordnungen für eine Verwendung in solchen Spinnmaschinen einsetzbar.

Bei einem bürstenlosen Gleichstrommotor oder Servomotor handelt es sich um einen Motor, der ein wesentlich günstigeres Anfahrverhalten zeigt als herkömmliche Synchron-, Reluktanz- oder Asynchronmotoren. Insbesondere ist ein bürstenloser Gleichstrommotor kurzzeitig auf das Mehrfache seines Nenndrehmomentes überlastbar, und zwar während einer Zeitperiode, die größer ist als die typischen Anfahrzeiten bei Textilmaschinen von z. B. 5 sec. Dies bedeutet, daß die Nennlast des Motors nicht in erster Linie auf das eingangs erwähnte hohe Anfahrdrehmoment hin gewählt werden muß, sondern daß die Nennleistung des Motors auf den Normalbetrieb zugeschnitten sein kann und die kurzzeitige Überlastung während der Anfahrphase zur Erbringung eines höheren Anlauf-Drehmomentes durchaus im Rahmen der üblichen Leistungsgrenzen liegt.

In der Praxis bedeutet dies z. B., daß als Streckwerkmotor an einer Ringspinnmaschine zur Bedienung von 1000 Spinnstellen anstelle eines 5 kW-Reluktanzmotors ein bürstenloser Gleichstrommotor mit elektronischer Kommutation von nur 1,5 kW Nennleistung gewählt wird. Dieser Motor läßt sich während einer typischen Anfahrzeit von etwa 5 Sekunden zu 350% überlasten, um das erforderliche Anfahrdrehmoment zu erbringen. Die maximale Drehzahl dieses Motors wird auf 6000 Umdrehungen pro Minute festgelegt.

Besonders günstig wirkt sich die direkte dynamische Regelung in Verbindung mit einer zusätzlichen Rotorschwungmasse aus. Für das Beispiel einer Ringspinnmaschine der zuvor erwähnten Größe beträgt die Auslaufzeit der Maschine etwa 10 Sekunden. Wird eine zusätzliche Schwungmasse auf dem Rotor des Streckwerkmotors Mx z. B. aus einer Eisenscheibe von 200 mm Durchmesser und ca. 3 mm Dicke pro 100 Spinnstellen, also für 1000 Spinnstellen 30 mm Dicke vorgesehen, so genügt die kombinierte Massenträgheit aus dieser Schwungmasse, dem Motorrotor sowie den anderen bewegten Massen des Streckwerks, um eine allein durch die mechanische Massenträgheit verursachte Auslaufzeit zu erzeugen, die der Auslaufzeit des Hauptantriebs, im Beispiel also des Spindelantriebs, entspricht. Damit ist auch bei plötzlichem Stromausfall die Voraussetzung gegeben, daß der Streckwerksantrieb während der Auslaufzeit mit dem Spindelantrieb synchron gehalten werden kann. Die Gefahr von Fadenbrüchen bei unvorhergesehenem Spannungsfall wird durch diese Maßnahme erheblich reduziert.

Als Regler hat sich ein integrierter Positionsregler mit elektronischer Kommutation als vorteilhaft erwiesen, wie er z. B. als integrierter Schaltkreis Typ HCTL-1000 von Hewlett-Packard vertrieben wird. Mit diesem Reglertyp ist eine besonders einfache und trotzdem genaue Positionsregelung ohne die geringste Gefahr von Torsionsschwingungen sichergestellt.

Eine solche Regelung in Verbindung mit dem erwähnten Servomotor stellt eine sehr direkte Regelung mit außerordentlich guten dynamischen Eigenschaften dar, die sich in Verbindung mit den Streckwerken zu einer harmonischen Antriebseinheit verbindet.

## Patentansprüche

1. Streckwerk mit einer ersten Antriebseinrichtung und mit einer zweiten Antriebseinrichtung, welche zum Antreiben von jeweiligen Zylindern des Streckwerks vorgesehen sind, wobei die erste, den Lieferzylinder antreibende Antriebseinrichtung ein Mastermotor (Mx) ist, während die zweite Antriebseinrichtung durch einen Slavemotor (My) gebildet ist, dessen Sollwert vom Mastermotor (Mx) ableitbar ist,
dadurch gekennzeichnet,
daß der Mastermotor (Mx) ein rotationsgeregelter Gleichstrommotor ist und daß der Slavemotor (My) ein positionsgeregelter Gleichstrommotor ist und daß der Mastermotor mit einer den Sollwert für den Slave-motor liefernden Kodiereinrichtung ausgestattet ist.

2. Streckwerk mit einer ersten Antriebseinrichtung und mit einer zweiten Antriebseinrichtung, welche zum Antreiben von jeweiligen Zylindern des Streckwerks vorgesehen sind, wobei die erste, den Lieferzylinder antreibende Antriebseinrichtung ein Mastermotor (Mx) ist, während die zweite Antriebseinrichtung durch einen Slavemotor (My) gebildet ist, dessen Sollwert vom Mastermotor (Mx) ableitbar ist,
dadurch gekennzeichnet,
daß der Mastermotor (Mx) ein positionsgeregelter Gleichstrommotor ist und daß der Slavemotor (My) ein positionsgeregelter Gleichstrommotor ist und daß der Mastermotor mit einer den Sollwert für den Slave-motor liefernden Kodiereinrichtung ausgestattet ist.

3. Streckwerk nach einem der vorhergehenden Ansprüche,
dadurch gekennzeichnet,
daß die Motoren bürstenlose Gleichstrommotore sind.

4. Streckwerk nach Anspruch 3,
dadurch gekennzeichnet,
daß die Motoren elektronische Kommutation aufweisen.

5. Streckwerk nach Anspruch 3 oder 4,
dadurch gekennzeichnet,
daß der bürstenlose Gleichstrommotor zur Ermöglichung der elektronischen Kommutation ein dem Rotor zugeordnetes Positionserfassungssystem aufweist und mit einer positionsgeregelten Rückkopplungsschleife ausgestattet ist.

6. Streckwerk nach einem der vorhergehenden Ansprüche,
dadurch gekennzeichnet,
daß der Slavemotor (My) zum Antreiben des Mittelzylinders des Streckwerks vorgesehen ist.

7. Streckwerk nach einem der vorhergehenden Ansprüche,
dadurch gekennzeichnet,
daß mindestens der Slavemotor (My) mit einer zusätzlichen Schwungmasse gekoppelt ist um ein kontrolliertes Auslaufen des Streckwerks beim Spannungsausfall sicherzustellen.

## Claims

1. Draw frame with a first drive unit and a second drive unit, which are intended for driving of each cylinder of the draw frame, in that the first drive unit is a master motor (Mx) which drives the delivery cylinder, whereby the second drive unit is formed by a slave motor (My) of which actual value can be deduced of the master motor (Mx), **characterised in that** the master motor (Mx) is a rotation controlled direct current motor and that the slave motor (My) is a position controlled direct current motor and that the master motor is equipped with a code device which supplies the actual value for the slave motor.

2. Draw frame with a first drive unit and a second drive unit, which are intended for driving of each cylinder of the draw frame, in that the first drive unit is a master motor (Mx) which drives the delivery cylinder, whereby the second drive unit is formed by a slave motor (My) of which actual value can be deduced of the master motor (Mx), **characterised in that** the master motor (Mx) is a position controlled direct current motor and that the slave motor (My) is a position controlled direct current motor and that the master motor is equipped with a code device which supplies the actual value for the slave motor.

3. Draw frame according to one or several of the claims, **characterised in that** the motors are brushless direct current motors.

4. Draw frame according to claim 3, characterised in that the motors have electronic commutation.

5. Draw frame according to claim 3 or 4, **characterised in that** the brushless direct current motor has a position detecting system which relates to the rotor to make electronic commutation possible and which is equipped with a position controlled back up loop.

6. Draw frame according to one or several of the claims, **characterised in that** the slave motor (My) is intended for driving the middle cylinder of the draw frame .

7. Draw frame according to one or several of the claims, **characterised in that** at least the slave motor (My) is coupled with an additional gyrating mass in order to ensure a controlled running-out of the draw frame in case of an electrical fall out.

## Revendications

1. Train d'étirage comportant une première installation de commande et une deuxième installation de commande qui sont prévues pour la commande de cylindres respectifs, la première installation de commande commandant le cylindre de livraison étant un moteur maître (Mx) tandis que la deuxième installation de commande est constituée par un moteur esclave (My) dont la valeur de consigne peut être dérivée du moteur maître (Mx), caractérisé en ce que le moteur maître (Mx) est un moteur à courant continu à réglage de la rotation et que le moteur esclave (My) est un moteur à courant continu à réglage de la position et que le moteur maître est pourvu d'une installation de codage fournissant la valeur de consigne pour le moteur esclave.

2. Train d'étirage comportant une première installation de commande et une deuxième installation de commande qui sont prévues pour la commande de cylindres respectifs, la première installation de commande commandant le cylindre de livraison étant un moteur maître (Mx) tandis que la deuxième installation de commande est constituée par un moteur esclave (My) dont la valeur de consigne peut être dérivée du moteur maître (Mx), caractérisé en ce que le moteur maître (Mx) est un moteur à courant continu à réglage de la position et que le moteur esclave (My) est un moteur à courant continu à réglage de la position et que le moteur maître est pourvu d'une installation de codage fournissant la valeur de consigne pour le moteur esclave.

3. Train d'étirage selon l'une des revendications précitées, caractérisé en ce que les moteurs sont des moteurs à courant continu sans balais.

4. Train d'étirage selon la revendication 3, caractérisé en ce que les moteurs présentent une commutation électronique.

5. Train d'étirage selon la revendication 3 ou 4, caractérisé en ce que le moteur à courant continu sans balais comporte un système de saisie de position affectée au rotor pour permettre la commutation électronique et qu'il est pourvu d'une boucle de rétroaction à réglage de la position.

6. Train d'étirage selon l'une des revendications précitées, caractérisé en ce que le moteur esclave (My) est prévu pour la commande du cylindre médian du train d'étirage.

7. Train d'étirage selon l'une des revendications précitées, caractérisé en ce qu'au moins le moteur esclave (My) est accouplé à une masse mobile supplémentaire afin d'assurer l'arrêt contrôlé par ralentissement du train d'étirage en cas d'une chute absolue de tension.
